# EUROPEAN PATENT APPLICATION

(11) **EP 4 557 457 A1**
(43) Date of publication of application: **21.05.2025**
(21) Application number: 24192212.9
(22) Date of filing: 31.07.2024
(51) Int. Cl.: H01M 10/613, H01M 10/6556, H01M 10/6569, H01M 50/103

(54) **BATTERY CASE AND BATTERY MODULE**

(30) Priority: 17.11.2023 CN 202323133811 U; 17.11.2023 CN 202311556074; 28.11.2023 CN 202323238140 U; 21.02.2024 WO PCT/CN2024/077916
(71) Applicant: Eve Power Co., Ltd., Jingmen, Hubei 448000 (CN)
(72) Inventor: YUAN, Dingding, Jingmen, Hubei, 448000 (CN); GUO, Jiahao, Jingmen, Hubei, 448000 (CN); CHE, Liyuan, Jingmen, Hubei, 448000 (CN); ZHAO, Hongwan, Jingmen, Hubei, 448000 (CN); XIA, Yang, Jingmen, Hubei, 448000 (CN); SUN, Fei, Jingmen, Hubei, 448000 (CN)
(74) Representative: Murgitroyd & Company

(57) **Abstract**

A battery case (100) and a battery module are provided. The battery case (100) includes a top cover assembly (300), a base plate (101), and a side plate (102) connected to the base plate (101). The base plate (101) and the side plate (102) enclose an installation cavity (103) which is sealed by the top cover assembly (300). Among them, at least one of the base plate (101) and the side plate (102) includes a vapor chamber structure. The battery case (100) and the battery module have good heat dissipation performance.

## Description

This application claims priority to Chinese patent applications with application numbers 202311556074.9 filed with the State Intellectual Property Office of the People's Republic of China on November 17, 2023, 202323133811.2 filed on November 17, 2023, and 202323238140.6 filed on November 28, 2023, and claims the benefits of the priority of International Application No. PCT/CN2024/077916 filed with the World Intellectual Property Organization on February 21, 2024. The entire contents of these applications are incorporated herein by reference.

### Technical Field

The present application relates to a field of battery technology, specifically to a battery case and a battery module.

### Related Art

An outer casing of a battery is primarily used to protect internal materials of the battery. Currently, most casings in the industry are made of aluminum. However, when a lot of heat is generated inside the battery, relying solely on the aluminum casing makes it difficult to completely cool the battery module, which can lead to the battery module easily triggering a phenomenon known as thermal runaway.

A vapor chamber is a type of heat transfer element that uses the latent heat of phase change of the working fluid to remove heat. It is the most potential heat management approach to solve cooling problems in products and equipment. Currently, vapor chambers are mainly used in the cooling of electronic devices. They have excellent thermal conductivity, a large heat transfer area, and good temperature uniformity; especially as they are ultra-thin and can be adjusted in size according to the actual cooling needs. Therefore, due to their excellent thermal conductivity, they are very suitable for cooling secondary batteries, especially in the field of high-capacity battery cooling, attracting significant attention from researchers. The performance and lifespan of secondary batteries are closely related to their operating temperature. Only by operating within the appropriate temperature range can the performance of secondary batteries be optimized and their thermal safety ensured. Excessively high temperatures can easily trigger thermal runaway of battery cells or even battery modules, leading to combustion, explosion, and other safety incidents. Conversely, too low temperatures can reduce the electrochemical reaction activity inside the battery, leading to a sharp decline in battery performance.

In related technologies, researchers have applied the vapor chamber (VC) to battery modules, placing a VC between two battery cells; however, this process is very unfriendly to module system assembly, increases the difficulty of the assembly process, and may result in unstable mounting of the battery cells within a module box.

### SUMMARY

This application provides a battery case and a battery module to address the above technical issues.

In a first aspect, the present application provides a battery case, including:

a top cover assembly, a base plate, and a side plate connected to the base plate, wherein the base plate and the side plate enclose an installation cavity, and the top cover assembly seals the installation cavity, wherein at least one of the base plate and the side plate comprises a vapor chamber structure.

In a second aspect, the present application provides a battery module, including:
a bottom protective plate, wherein the bottom protective plate is internally equipped with cooling fluid channels, and provided with an inlet and an outlet positioned on a surface of the bottom protective plate and communicating with the cooling fluid channels; and
a plurality of batteries, wherein the batteries are mounted on the bottom protective plate, each of the batteries comprises a battery case with a battery cell inside the battery case,
wherein one side of the battery case facing the bottom protective plate is provided with at least one opening, a vapor chamber is installed inside the opening, one side of the vapor chamber either indirectly or directly contacts the bottom protective plate, and another side of the vapor chamber either indirectly or directly contacts the battery cell.

### BRIEF DESCRIPTION OF THE DRAWINGS

FIG. 1 is a schematic structural view of a battery case provided by one embodiment of the present application.
FIG. 2 is an unfolded schematic view of a base plate and a side plate in FIG. 1.
FIG. 3 is a cross-sectional view of a first vapor chamber in FIG. 1.
FIG. 4 is a schematic structural view of a base plate in FIG. 1.
FIG. 5 is a schematic structural view of the battery case provided by another embodiment of the present application.
FIG. 6 is an unfolded schematic view of the base plate and the side plate in FIG. 5.
FIG. 7 is a cross-sectional view of a second vapor chamber in FIG. 5.
FIG. 8 is an unfolded schematic view of the side plate in FIG. 5.
FIG. 9 is a schematic structural view of the battery case provided by yet another embodiment of the present application.
FIG. 10 is an unfolded schematic view of the base plate and the side plate in FIG. 9.
FIGs. 11A and 11B are schematic structural views of a first cover plate provided by one embodiment of the present application.
FIGs. 12A, 12B, 12C, 12D, and 12E are schematic views of a conductor provided by one embodiment of the present application.
FIGs. 13A and 13B are schematic structural views illustrating another structure of the first cover plate provided by one embodiment of the present application.
FIG. 14 is a schematic structural view of a cover plate assembly provided by one embodiment of the present application.
FIG. 15 is a schematic structural view of a top cover assembly provided by one embodiment of the present application.
FIG. 16 is a perspective schematic view of a battery module provided by one embodiment of the present application.
FIG. 17 is a perspective schematic view of a battery provided by one embodiment of the present application.
FIG. 18 is a first perspective schematic view of the battery case provided by one embodiment of the present application.
FIG. 19 is a second perspective schematic view of the battery case provided by one embodiment of the present application.
FIG. 20 is an enlarged partial view of part A in FIG. 19.

Description of the figure legends:
100: battery case; 101: base plate; 102: side plate; 103: installation cavity; 105: first vapor chamber; 106: first outer plate; 107: first inner plate; 108: first support protrusions; 109: first liquid-wicking core; 110: first cavity; 111: first protruding structure; 112: first long protrusion; 113: first protrusion point; 114: second vapor chamber; 115: second outer plate; 116: second inner plate; 117: second support protrusion; 118: second liquid-wicking core; 119: second cavity; 120: second protruding structure; 121: second long protrusion; 122: second protrusion point; 123: third protrusion point; 124: first plate; 125: second plate; 126: third plate; 127:fourth plate; 128: fifth plate; 129: sixth plate; 130: first part; 131: second part; 134: third part; 135: fourth part; 136: fifth part; 137: sixth part; 138: first side plate; 139: second side plate; 140: third side plate; 141: fourth side plate; 142: dense area; 143: less-dense area; 144: bent area : 200: cover plate assembly; 300: top cover assembly; A: housing cavity; 210: first cover plate; 201:sealing plate; 202: bottom cover plate; 203: edge board; 204: installation part; 2041: first through-hole; 2042: second through-hole; 2043: connecting barrier; 205: installation groove; 220: second cover plate; 230: conductor; 240: cooling medium; 250: sealing ring; 260: first plastic piece; 270: terminal pressure plate; 280: second plastic piece; 290: electrode terminal ; 10: bottom protective plate ; 11: inlet; 12: outlet; 20: battery; 2: opening; 22: vapor chamber.

### DETAILED DESCRIPTION

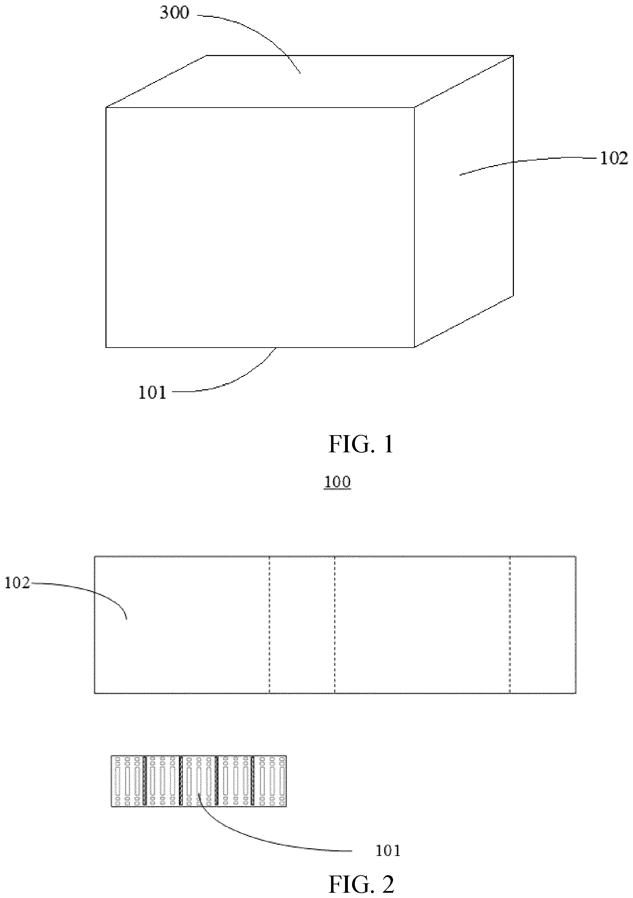

The present application provides a battery case, with FIGs. 1 to 10 illustrating the schematic structural views of the battery case provided. The battery case 100 includes a top cover assembly 300, a base plate 101, and a side plate 102 connected to the base plate 101. The base plate 101 and the side plate 102 form an installation cavity 103 closed by the top cover assembly 300. At least one of the base plate 101 and the side plate 102 includes a vapor chamber structure. The battery case provided by this application has good thermal conductivity, can prevent localized overheating, has strong resistance to deformation, and has a high safety factor. The battery case 100 is described below in detail with reference to the main drawings.

Refer to FIGs. 1, 2, and 5, the battery case 100 includes the base plate 101 and the side plate 102 bent and connected to the base plate 101. The base plate 101 and the side plate 102 surround the installation cavity 103. At least one of the base plate 101 and the side plate 102 includes a vapor chamber structure.

In the technical scheme of the present application, the battery case 100 is primarily used to house battery cells. Specifically, the vapor chamber structure itself is simple in design and low in manufacturing cost, and the vapor chamber structure has efficient thermal diffusion capabilities. By using the vapor chamber structure as the base plate 101 or the side plate 102 of the battery case 100, and incorporating the vapor chamber structure into the structure of the battery case 100, the vapor chamber structure directly contacts the battery cells, directly cooling the battery cells and preventing localized high temperatures. This ensures that the entire battery remains in a temperature-balanced state, avoiding thermal runaway. Additionally, using the vapor chamber structure directly as the battery case 100 eliminates the need to consider connection methods between the vapor chamber structure and the battery cells, reducing the assembly difficulty of the battery, enhancing production efficiency, and further avoiding issues like instability during the assembly process, thereby enhancing the overall stability of the battery.

Specifically, in this embodiment, to prevent excessive temperatures of the battery, the base plate 101 of the battery case 100 uses a vapor chamber structure, while the side plate 102 is made of a bent aluminum casing. The bent aluminum casing has a simple fabrication process and good thermal conductivity. Specifically, the base plate 101 and the side plate 102 are connected by welding.

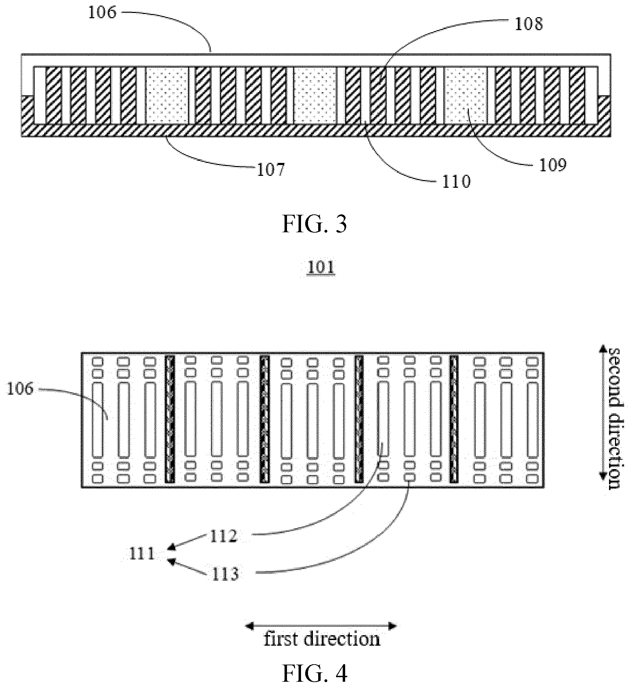

Referring to FIG. 3, the vapor chamber structure includes a first vapor chamber 105. In this embodiment, the first vapor chamber 105 serves as a bottom of the battery case 100. The first vapor chamber 105 includes a first outer plate 106, a first inner plate 107, a plurality of first support protrusions 108, and at least one first liquid-wicking core 109. The first outer plate 106 and the first inner plate 107 are connected to each other, forming a first accommodating cavity between them. The first support protrusions 108 are spaced within the first accommodating cavity. Thus, the adjacent two first support protrusions 108, the first inner plate 107, and the first outer plate 106 together enclose a first cavity 110. This first cavity 110 is used for holding a liquid cooling medium. The first liquid-wicking core 109 is placed inside the first cavity 110 to absorb the liquid cooling medium. In the operating state, with the base plate 101 in a vertical orientation, the first cavity 110 becomes a first upper cavity and a first lower cavity arranged in an up-down direction. Due to gravity, the cooling medium concentrates in the first lower cavity, resulting in lower cooling efficiency in the first upper cavity compared to the first lower cavity. To ensure cooling efficiency, one end of the first liquid-wicking core 109 abuts a side of the first outer plate 106 facing the first inner plate 107, and the other end of the first liquid-wicking core 109 abuts a side of the first inner plate 107 facing the first outer surface. Thus, the first liquid-wicking core 109 is positioned in both the first upper cavity and the first lower cavity, allowing the first liquid-wicking core 109 to absorb the liquid cooling medium in the first lower cavity and transfer the liquid cooling medium to the first upper cavity, essentially equalizing the cooling efficiency between the first upper cavity and the first lower cavity and preventing localized overheating due to inconsistent cooling efficiency.

It should be noted that the first support protrusions 108 serve to support the first inner plate 107 and the first outer plate 106, enhancing the strength of the first vapor chamber 105. In practical applications, the battery generates significant heat during operation, which can cause the battery cell to expand. This expansion may compress the base plate 101, leading to deformation of the base plate 101. The first support protrusions 108 set between the first inner plate 107 and the first outer plate 106 increase the strength of the first inner plate 107 and the first outer plate 106, preventing them from being compressed and deformed.

In the present embodiment, the first liquid-wicking core 109 is made of capillary fibers. A cooling process of the first vapor chamber 105 is as follows: the first liquid-wicking core 109 absorbs the liquid cooling medium from the first lower cavity, allowing the liquid cooling medium to fill the entire first liquid-wicking core 109. Through its capillary structure, the first liquid-wicking core 109 diffuses the absorbed liquid cooling medium into the first upper cavity. In the first upper cavity, the liquid cooling medium absorbs heat and transitions from liquid to gas. As the first liquid-wicking core 109 continuously transports the liquid cooling medium into the first upper cavity, the liquid cooling medium displaces the liquid cooling medium in a gas state, forcing the gas-state liquid cooling medium to move to the first lower cavity. When the gas-state liquid cooling medium contacts a bottom wall (i.e., the first outer plate 106, which is exposed to an external environment) of the first lower cavity, it cools and transitions back to liquid, accumulating in the first lower cavity. The liquid cooling medium is then reabsorbed by the first liquid-wicking core 109 back into the first upper cavity, thus establishing a cooling cycle.

Specifically, considering the strength and thermal conductivity of the battery case 100, the materials for the first inner plate 107 and the first outer plate 106 are chosen to be metallic. In this embodiment, the first inner plate 107 is made of copper, and the first outer plate 106 is made of copper. Additionally, the first support protrusions 108 are also made of copper.

It should be noted that in this embodiment, the first inner plate 107 and the first outer plate 106 are connected by welding. The first cavity is either in a vacuum or near-vacuum state (the near-vacuum state refers to a gas pressure inside the first cavity 110 lower than 1Pa); setting the first cavity to a vacuum or near-vacuum state aims to prevent leaks when the liquid cooling medium transitions to gas.

It should be noted that in this embodiment, the specific type of liquid cooling medium is not limited to particular types as long as the liquid cooling medium can cycle between gas and liquid states, such as water, ethanol, or ethylene glycol.

In practical applications, if the battery cell heats and expands, it compresses the battery case 100. To prevent the bottom of the battery case 100 from bending and deforming, it is necessary to increase the strength of the bottom. Specifically, refer to FIG. 4 in this embodiment, the first vapor chamber 105 further includes a plurality of first protruding structures 111. These first protruding structures 111 can be located on a side of the first inner plate 107 away from the first outer plate 106, or on a side of the first outer plate 106 away from the first inner plate 107. Considering space utilization, when the first protruding structures 111 are placed on the first inner plate 107, they occupy the space of the battery cell, leading to reduced cell size and overall battery capacity. To avoid these issues, as a preferred implementation, the first protruding structures 111 are placed on the side of the first outer plate 106 away from the first inner plate 107. This arrangement enhances the strength of the base plate 101 without occupying the space of the battery cell.

During the actual assembly process, the temperature in the middle part of the bottom is higher than at edges. During expansion of the battery cell, the pressure exerted by the battery cell on the middle part of the base plate 101 is greater than on the edges. Considering the need to balance strength and lightweight design, refer again to FIG. 4, the first protruding structures 111 include a plurality of first long protrusions 112 and a plurality of first protrusion points 113. The first long protrusions 112 and the first protrusion points 113 strengthen the base plate 101 by providing reinforcement in two different shapes to different parts of the base plate 101, meeting the strength requirements of different parts of the base plate 101. Specifically, the first long protrusions 112 are located in the middle part of the base plate 101, and the first protrusion points 113 are at the edges. Considering the need for lightweight design, the pressure at the edges of the base plate 101 is less than in the middle part, allowing for a reduction in the size of the third protrusion point 123, thus reducing the overall weight of the base plate 101 to meet lightweight requirements. More specifically, a length of the second long protrusion 121 is greater than a length of the third protrusion point 123. The temperature in the middle part of the base plate 101 is higher than at the edges of the base plate 101. The second long protrusion 121 can increase a surface area of the base plate 101, enhancing its heat exchange capacity. Additionally, the second long protrusion 121 can increase the support strength of the base plate 101, preventing the base plate 101 from bending or deforming due to the excessive weight of the battery cell, or from the battery cell's heat-induced expansion pressing on the base plate 101, which could cause the base plate 101 of the battery case to become uneven or even damaged.

It should be noted that the arrangement of the first long protrusions 112 and the first protrusion points 113 is not limited to particular arrangements, as long as they meet the strength requirements of the middle part of the base plate 101. However, considering that the more uniformly the force is distributed, the less likely it is for local deformation to occur, in this embodiment, please refer to FIG. 4. Using a first direction shown in FIG. 4 as a reference, where a second direction is perpendicular to the first direction within a horizontal plane (the first direction being a length direction of the battery case 100, and the second direction being a width direction of the battery case 100), the base plate 101 includes two first sides set opposite each other along the first direction and two second sides along the second direction. The first long protrusions 112 extend along the width direction of the battery case 100 and are spaced along the length direction of the battery case 100 in the middle part of the base plate 101. The first protrusion points 113 are located at two ends of the first long protrusions 112, mainly concentrated near the two second sides. No first protrusion points 113 are set near the two first sides. Depending on actual needs, the two first long protrusions 112 near the two first sides can be replaced with multiple first protrusion points 113, or, as in this embodiment, the two long protrusions can be retained. The choice depends on the actual situation. This setup ensures that the force on the base is evenly distributed, preventing local deformation of the base.

In the present embodiment, considering factors such as the size of the battery cells, the uniformity of stress distribution, the need for structural strength, and the requirement for lightweight design, the applicant has determined through repeated research and testing that in the width direction of the battery case 100, the size of the first long protrusion 112 is b, and the size of the first vapor chamber 105 is B, where b = cB, and c is a coefficient, with 1/4 < c ≤ 2/3. In this embodiment, the size of the first vapor chamber 105 in the width direction of the battery case 100 is the width of the first vapor chamber 105, and the size of the first long protrusion 112 in the width direction of the battery case 100 is the length of the first long protrusion 112. Specifically, when the size of the first long protrusion 112 meets these requirements, the strength of the base plate 101 meets the technological strength requirements, and its lightweight design is also in accordance with technological lightweight standards. It should be noted that the width of the first vapor chamber 105 is mainly determined based on actual needs and application scenarios.

Please continue to refer to FIG. 4. To enhance the cooling efficiency of the first vapor chamber 105, there are multiple first liquid-wicking cores 109, which extend in the width direction of the battery case 100 and are spaced along the length of the battery case 100. Each of the first liquid-wicking cores 109 is located on one side of the corresponding first long protrusions 112 and the corresponding first protrusion points 113. Specifically, in this embodiment, an extension direction of the first liquid-wicking cores 109 is the same as an extension direction of the first long protrusions 112. For cooling efficiency, every three of the long protrusions are grouped together, with a first liquid-wicking core 109 set between each pair of adjacent groups. This setup not only ensures the strength of the base plate 101 but also maintains the cooling efficiency of the base plate 101.

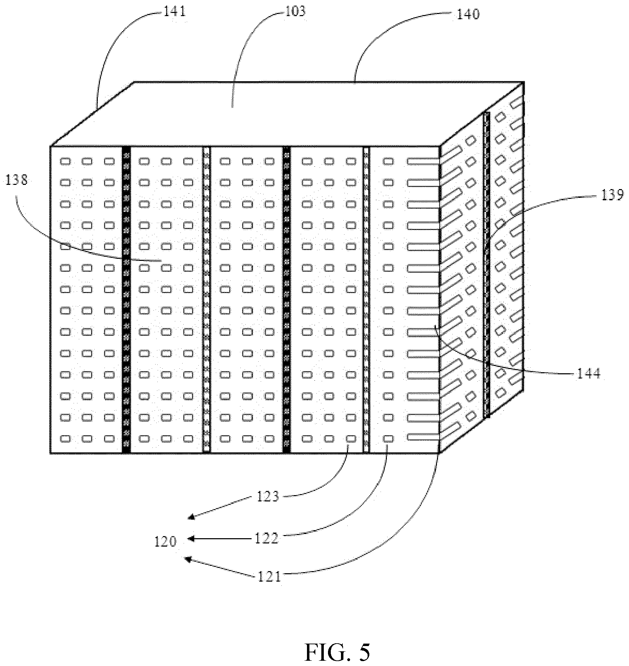

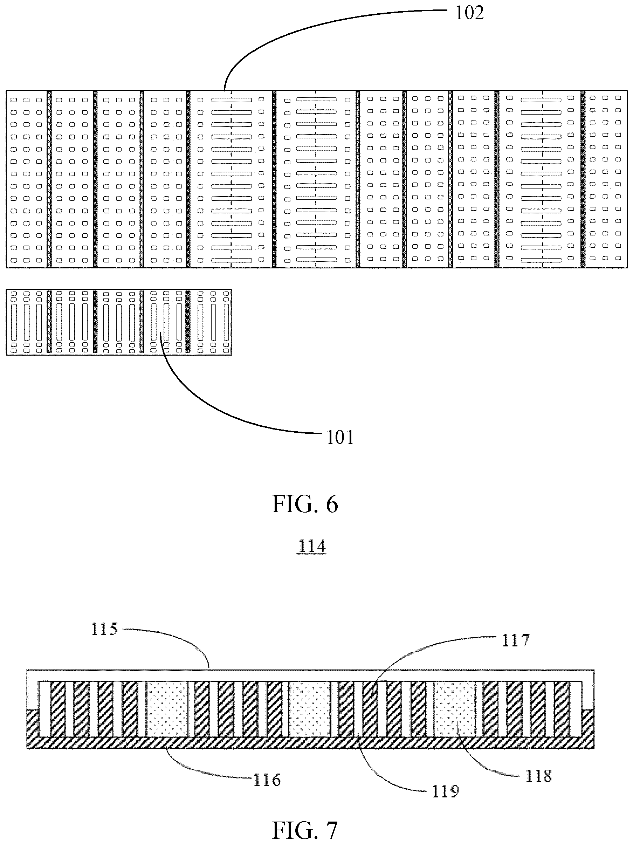

In another embodiment, please refer to FIGs. 5 and 6, the base plate 101 of the battery case 100 adopts a vapor chamber structure, and the side plate 102 of the battery case 100 also utilizes a vapor chamber structure to cool the entire battery, keeping the battery at a uniform temperature.

Specifically, in the present embodiment, refer to FIG. 7, the vapor chamber structure includes a second vapor chamber 114. The battery case 100 uses the first vapor chamber 105 as the base plate 101, and the second vapor chamber 114 as the side plate 102. The specific structure of the first vapor chamber 105 can be referenced from the previous embodiment, which is not redundantly described here; the second vapor chamber 114 comprises a second outer plate 115, a second inner plate 116, a plurality of second support protrusions 117, and at least one second liquid-wicking core 118. The second outer plate 115 and the second inner plate 116 are connected to each other, forming a second accommodating cavity between the second outer plate 115 and the second inner plate 116. The second support protrusions 117 are spaced within this second accommodating cavity. Thus, the adjacent two second support protrusions 117, the second outer plate 115, and the second inner plate 116 together enclose a second cavity 119. The second cavity 119 is used for housing a liquid cooling medium, and the second liquid-wicking core 118 is placed inside the second cavity 119 for absorbing the liquid cooling medium. A specific cooling process of the second vapor chamber 114 is the same as the cooling process of the first vapor chamber 105, which can be referenced accordingly and will not be redundantly described here.

It should be noted that a material of the second inner plate 116 is metallic, and a material of the second outer plate 115 is metallic. As a preferred implementation, the material for the second inner plate 116 is chosen to be copper, and the material for the second outer plate 115 is also copper. Additionally, a material for the second support protrusions 117 is also chosen to be copper; the second liquid-wicking core 118 is made of capillary fibers; the second cavity 119 is in a vacuum or near-vacuum state (the near-vacuum state is defined as the gas pressure inside the first cavity 110 being lower than 1Pa).

In practical applications, the expansion of the battery cell due to heating can exert pressure on the battery case 100. To prevent the side plate 102 from bending and deforming, it is necessary to increase the strength of the side plate 102. Specifically, as shown in FIG. 5, the second vapor chamber 114 also includes a plurality of second protruding structures 120. The second protruding structures 120 can be positioned on a side of the second inner plate 116 that faces away from the second outer plate 115 or on a side of the second outer plate 115 that faces away from the second inner plate 116. Considering space utilization, when the second protruding structures 120 are placed on the first inner plate 107, they occupy the space of the battery cell, leading to a reduction in cell size and overall battery capacity. To avoid this issue, as a preferred implementation, the second protruding structures 120 are placed on the side of the second outer plate 115 facing away from the second inner plate 116. This configuration not only enhances the strength of the side plate 102 but also does not occupy the space of the battery cell.

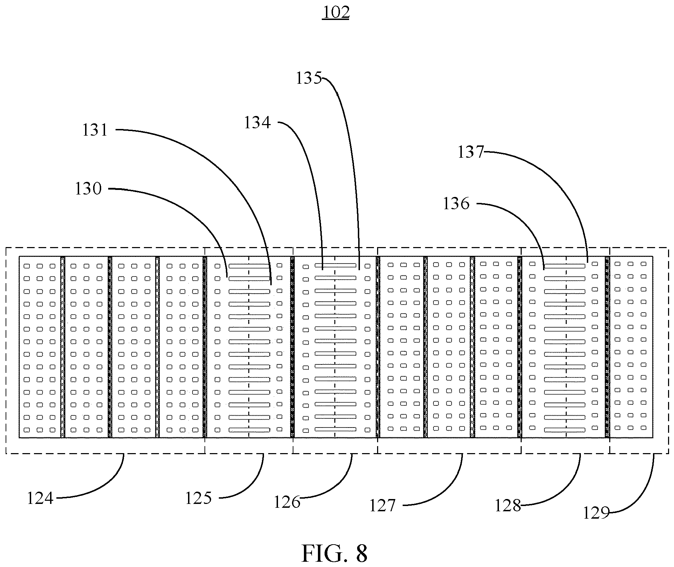

Please refer to FIG. 6 and FIG. 8. The side plate 102 is formed by bending a single piece of the second vapor chamber 114 multiple times, creating the side plate 102. As a result, the side plate 102 has bent areas 144, and creases are formed in the bent areas 144. The strength at these creases is weaker compared to other areas. When the battery cell inside the battery case 100 heats up and expands, if the expansion force is too great, the side plate 102 is prone to break at the bent area 144. Specifically, in this embodiment, the second protruding structures 120 include a plurality of second long protrusions 121 and a plurality of second protrusion points 122. The second long protrusions 121 are located at the bent area 144, spaced along the height of the battery case 100, and extend in a direction crossing the height direction. The second long protrusions 121 enhance the support strength of the bent areas 144, where bending is necessary, and the presence of the creases reduces strength. The second long protrusions 121 prevent a reduction in strength of the side plate 102 due to the creases; meanwhile, the second protrusion points 122 are placed at two ends of the long protrusions, further increasing the strength of the bent area 144. The second protrusion points can resist the expansion force of the battery cell inside the battery case 100, preventing bending, deformation, or even damage in the bent areas.

It should be noted that the locations of the creases within the bent areas 144 are weaker in strength and less capable of resisting the expansion force of the battery cell, whereas other parts in the bent areas 144 have a greater ability to resist the expansion force than the creases. Therefore, considering the need for lightweight construction, a length of the second long protrusion 121 is greater than a length of the second protrusion point 122. This design meets both the rigidity requirements and the lightweight needs of the side plate 102.

In this embodiment, considering the size of the battery cell, uniformity of stress distribution, structural strength requirements, and lightweight needs, it was determined through repeated research and testing that on the height direction of the battery case 100, the size of the side plate 102 is represented as A, and in the extension direction of the second long protrusion 121, the size is denoted as a, where a = dA, and d is a coefficient, with 1/10≤d≤1/5. In this embodiment, the size of the second vapor chamber 114 along the height direction of the battery case 100 is a width of the second vapor chamber 114, and the size of the second long protrusion 121 along the width direction of the battery case 100 is the length of the second long protrusion 121. Specifically, when the size of the second long protrusions 121 meets these requirements, the strength of the side plate 102 meets the technological strength requirements, and its lightweight design also meets the technological lightweight requirements. It is important to note that the width of the second vapor chamber 114 is primarily determined based on actual needs and application scenarios.

Please continue to refer to FIG. 5 and FIG. 8. The side plate 102 also includes non-bending areas, and the second protruding structures 120 further include a plurality of third protrusion points 123. The non-bending areas, which have not undergone bending deformation, therefore have a higher capability to resist the expansion force of the battery cell compared to the bent areas 144. Considering the need for lightweight construction, the size of the third protrusion point 123 can be appropriately reduced. Specifically, in this embodiment, the length of the second long protrusion 121 is greater than a length of the third protrusion point 123, with the second long protrusions 121 and the second protrusion points 122 located between the third protrusion points 123.

It is also noted that the size relationship between the second protrusion point 122 and the third protrusion point 123 is not limited to particular size relationships and can be set according to actual conditions. For example, in one embodiment, the size of the third protrusion point 123 and the size of the second protrusion point 122 are set to be the same; in another embodiment, to enhance the ability of the non-bending areas to resist the expansion force of the battery cell, the size of the third protrusion point 123 is larger than the size of the second protrusion point 122.

Please refer to FIG. 6 and FIG. 8. For ease of bending the second vapor chamber 114, the second vapor chamber 114 is segmented in this embodiment. Specifically, the second vapor chamber 114 includes a first plate 124, a second plate 125, a third plate 126, a fourth plate 127, a fifth plate 128, and a sixth plate 129. The first plate 124, the second plate 125, the third plate 126, the fourth plate 127, the fifth plate 128, and the sixth plate 129 are sequentially interconnected to surround the installation cavity 103. The second vapor chamber 114 requires three bends to achieve the interconnection, hence, the second vapor chamber 114 features three bending areas 144. Specifically, the first plate 124, the second plate 125, the third plate 126, the fourth plate 127, the fifth plate 128, and the sixth plate 129 are arranged such that the second plate 125, the third plate 126, and the fifth plate 128 each incorporate the bent area. The second long protrusions 121 and the second protrusion points 122 are located within the second plate 125, the third plate 126, and the fifth plate 128, while the third protrusion points 123 are positioned within the first plate 124, the fourth plate 127, and the sixth plate 129.

Please refer to FIG. 5 and FIG. 8, where the side plate 102 includes a first side plate 138 and a third side plate 140 opposite to each other, as well as a second side plate 139 and a fourth side plate 141 opposite to each other. The second side plate 139 is connected to one side of the first side plate 138 and the third side plate 140, while the fourth side plate 141 is connected to the other side of the first side plate 138 and the third side plate 140. In this embodiment, the first side plate 138 and the third side plate 140 are oppositely arranged along the second direction, and the second side plate 139 and the fourth side plate 141 are oppositely arranged along the first direction. Specifically, the second plate 125 includes a first part 130 and a second part 131 connected by bending, the third plate 126 includes a third part 134 and a fourth part 135 connected by bending, and the fifth plate 128 includes a fifth part 136 and a sixth part 137 connected by bending. More specifically, the first plate 124 and the first part 130 of the second plate 125 forms the first side plate 138; the second part 131 of the second plate 125 and the third part 134 of the third plate 126 form the second side plate 139; the fourth part 135 of the third plate 126, the fourth plate 127, and the fifth part 136 of the fifth plate 128 form the third side plate 140; the sixth part 137 of the fifth plate 128 and the sixth plate 129 form the fourth side plate 141.

Please refer to FIG. 6 and FIG. 8. To enhance the cooling efficiency of the side plate 102, in this embodiment, there are multiple second liquid-wicking cores 118. These second liquid-wicking cores 118 extend along the height direction of the battery case 100 and are spaced in a direction crossing the height direction. The second liquid-wicking cores 118 are located within the first plate 124 and the fourth plate 127, as well as between two adjacent plates from the first plate 124 to the sixth plate 129. Specifically, there are four second liquid-wicking cores 118 installed inside the first side plate 138, spaced apart such that a distance between every two adjacent second liquid-wicking cores 118 is the same, ensuring consistent cooling efficiency and avoiding local high temperature areas. One second liquid-wicking core 118 is installed in the second side plate 139 and is located at a central part of the second side plate 139. The third side plate 140 contains four second liquid-wicking cores 118, spaced apart such that a distance between every two adjacent second liquid-wicking cores 118 is the same to ensure consistent cooling and prevent local overheating. Similarly, one second liquid-wicking core 118 is located within the fourth side plate 141 and disposed at a central part of the fourth side plate 141. Thus, the first side plate 138, the second side plate 139, the third side plate 140, and the fourth side plate 141 each contain the second liquid-wicking core 118, with the number of the second liquid-wicking cores 118 adjusted according to respective sizes of these plates 138 to 141 to ensure overall uniform cooling efficiency of the side plate 102 and prevent deformation of the side plate 102 due to local overheating.

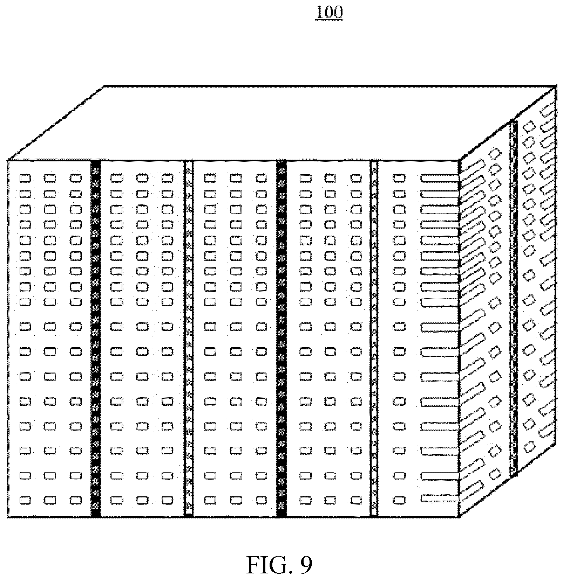

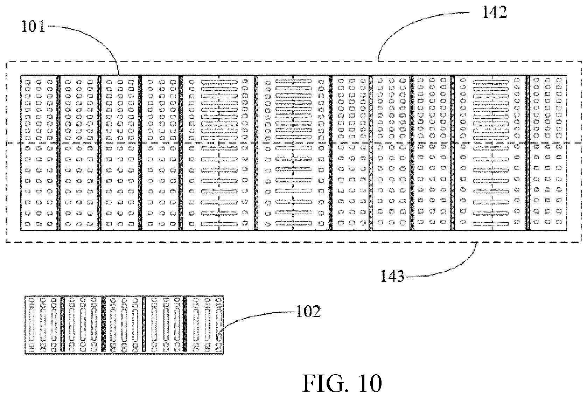

In one embodiment, as shown in FIG. 9 and FIG. 10, the vapor chamber structure includes the second vapor chamber 114, and the battery case 100 uses an aluminum plate as the base plate 101 and the second vapor chamber 114 as the side plate 102. The specific structure of the second vapor chamber 114 is referenced in the above embodiment and is not reiterated here.

The side plate 102 has a dense area 142 located away from the base plate 101 and a less-dense area 143 closer to the base plate 101. The density (concentration) of the second protruding structures 120 in the dense area 142 is greater than the density of the second protruding structures 120 in the less-dense area 143. It is important to note that the battery's top cover assembly 300 (located in the dense area 142) heats up quickly during operation due to the presence of terminal lugs, connecting pieces, and electrode terminals located in this area (the dense area 142), which cause a significant increase in current flow due to current aggregation in this area (the dense area 142), leading to significant temperature increases. Consequently, it is necessary to enhance the thermal exchange in this area (the dense area 142). By designing the dense area 142 to have a greater thermal exchange surface area, targeted heat dissipation can be achieved, preventing excessive temperatures that could lead to deformation or even damage of the battery case 100.

Considering the heating characteristics, the size of the terminal lugs, connecting pieces, and electrode terminals, the applicant has determined through repeated research and testing that a surface area of the dense area 142 is S1, and a surface area of the less-dense area 143 is S2, where S1 = e(S1 + S2) with e being a coefficient satisfying 1/7≤e≤1/2. Specifically, when the dense area 142 and the less-dense area 143 meet these criteria, the strength of the side plate 102 meets the strength requirements, and its lightweight design is also in line with the requirements.

More specifically, the arrangement of the second protruding structures 120 within the dense area is not limited to particular arrangements. In one embodiment, a distance between each pair of adjacent second protruding structures 120 within the dense area 142 is consistent; in another embodiment, the distance between each consecutive pair of adjacent second protruding structures 120 within the dense area 142 varies in an arithmetic progression; in yet another embodiment, the second protruding structures 120 within the dense area 142 are irregularly placed.

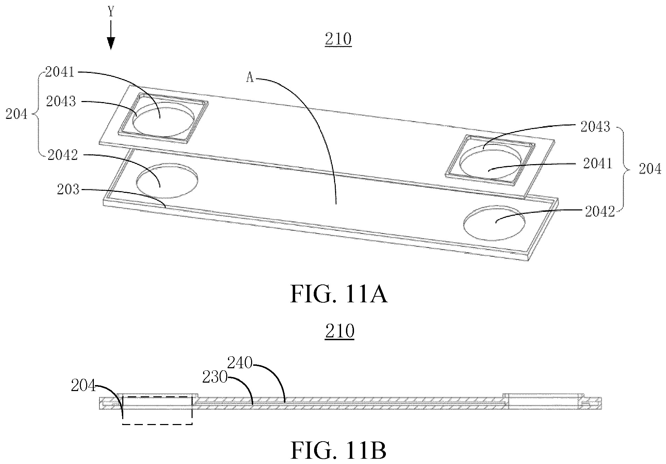

In the present application, the battery case further includes a top cover assembly 300. The top cover assembly 300 consists of a cover plate assembly 200. Please refer to FIG. 11A and FIG. 11B, which illustrate a cover plate assembly 200 configured for uniform heating of the battery. The cover plate assembly 200 includes:
a first cover plate 210 with a housing cavity A inside, wherein the first cover plate 210 includes a plurality of installation parts 204 along the first direction Y that penetrate the housing cavity A, configured to accommodate electrode terminals 290;
a conductor 230 located within the housing cavity A, at least partially encircling the installation parts 204; and
a cooling medium 240 filling the housing cavity A and the conductor 230.

Specifically, the first cover plate 210 functions to uniformly distribute temperature near the electrode terminals 290 and serves as a cover.

The housing cavity A is a sealed housing cavity with the conductor 230 and the cooling medium 240 located inside. The housing cavity A has a first height along the first direction Y. The installation parts 204 penetrate the housing cavity, meaning sidewalls of the installation parts 204 are set along the first direction Y and have a height equal to the first height. The conductor 230, for example, may encircle the sidewalls of the installation parts 204. During charging and discharging, the electrode terminals 290 transfer heat to the first cover plate 210 of the cover plate assembly, causing a nearby part of the conductor 230 to rapidly heat up. The cooling medium 240 stored in the conductor 230 absorbs the heat, transitioning from a liquid working medium to a gaseous working medium. The gaseous working medium 240 fills the housing cavity A. The housing cavity A includes a heat source area and a cooling area (not illustrated). The heat source area is an area in the housing cavity A near the electrode terminals 290 and the cooling area is an area in the housing cavity A farther from the electrode terminals 290. The temperature varies significantly between the heat source area and the cooling area. That is, the temperature in the heat source area is noticeably higher than in the cooling area. The cooling medium 240 (in liquid form) absorbs heat in the heat source area and transitions from the liquid working medium to the gaseous working medium, rapidly filling the housing cavity A, entering the cooling area, and quickly condensing. The condensed cooling medium 240 returns to the vicinity of the electrode terminals 290 through the conductor 230. After returning to the electrode terminals 290, the cooling medium 240 continues to absorb the heat generated by the electrode terminals 290, thereby facilitating a gas-liquid cycle, enhancing cooling performance, and preventing excessively high temperatures in the cover plate assembly 200.

Preferably, the cooling medium 240 does not completely fill the housing cavity A, which may include a vacuum space, depending on the actual application.

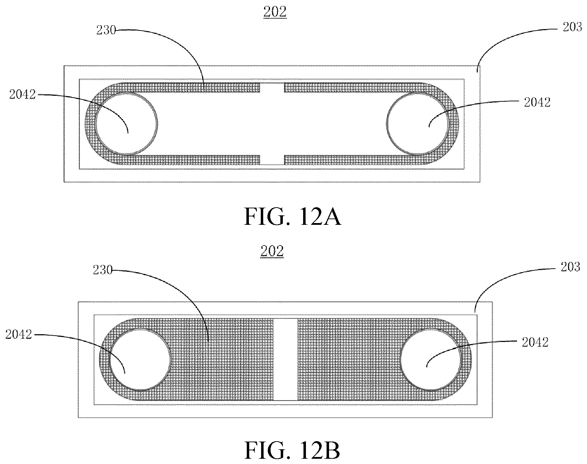

Please refer to FIG. 12A. In one embodiment, there are multiple conductors 230, each at least partially encircling the sidewall of the installation part 204 that is away from the electrode terminal 290.

In one embodiment, the conductors 230 are interconnected; alternatively, the conductors 230 may be spaced apart.

Specifically, each conductor 230 at least partially encircles and fits closely against the sidewall of the installation part 204 that is away from the electrode terminal 290; or, each conductor 230 may be spaced from the sidewall of the installation part 204 away from the electrode terminal 290 (that is, the conductor 230 is not attached to the sidewall), as long as it does not impede the gas-liquid cycle, with specifics depending on the actual application.

Exemplarily, there are two installation parts 204, meaning there are also two electrode terminals 290. The number of conductors 230, for example, may also be two, and the conductors 230 may be U-shaped as an example. Only part of the conductor 230 encircles and fits closely (or not closely) to the sidewall of the installation part 204. The open side of the U-shaped conductor 230 extends towards the conductor 230 of the other installation part 204. The conductors 230 on the two installation parts 204 may be connected as one unit or may be spaced apart, depending on the actual application.

In another embodiment, the number of installation parts 204, denoted as n (where n≥2), is not specifically limited. When designing a single battery with multiple electrode terminals (n > 2), the corresponding number of installation parts 204 should also be designed accordingly, to ensure that each installation part 204 has one electrode terminal 290 installed.

Specifically, the number of conductors 230 needs to be designed according to the number of electrode terminals 290. There can be multiple conductors 230 as separate parts or a single conductor 230 as an integrated piece, regardless of how the number of electrode terminals 290 changes. Each installation part 204 is surrounded by the conductor 230, thereby ensuring that the heat generated by each electrode terminal 290 can be absorbed by the cooling medium 240 in the conductor 230, facilitating a gas-liquid cycle, and thus achieving the purpose of uniform heat dissipation.

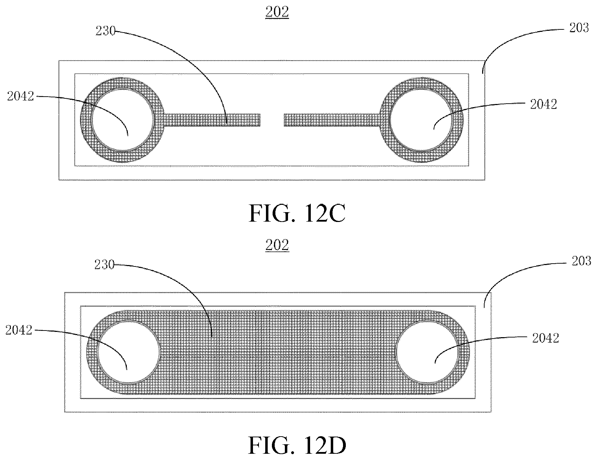

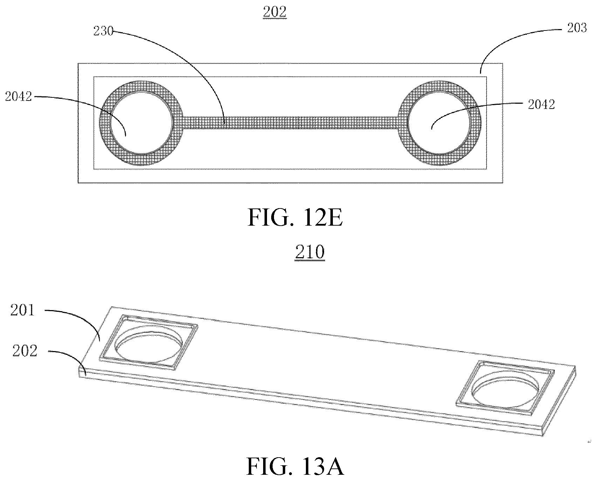

Please refer to FIGs. 12B, 12C, 12D, and 12E, where in one embodiment, there are multiple conductors 230, each surrounding the sidewall of the installation part 204 that is away from the electrode terminal 290.

Specifically, each conductor 230 encircles and closely fits the sidewall of the installation part 204 that is away from the electrode terminal 290; or, each conductor 230 encircles and is spaced from the sidewall of the installation part 204 away from the electrode terminal 290 (that is, the conductor 230 is not attached to the sidewall), with specifics depending on the actual application.

Exemplarily, the number of installation parts 204 is two, meaning there are two electrode terminals 290, and the number of conductors 230 may also be two, each set to encircle and closely fit (or not fit) the sidewall of the installation part 204. Additionally, each conductor 230 includes an extension portion, one end of the extension portion is connected to the conductor 230, and the other end of the extension portion connects to the extension portion of the conductor 230 on the other installation part 204.

Alternatively, the number of installation parts 204 is two, meaning there are two electrode terminals 290, and the number of conductors 230 may also be two, each conductor 230 encircling the sidewall of the installation part 204. Additionally, each conductor 230 includes an extension portion, one end of the extension portion is connected to the conductor 230, and the other end of the extension portion is spaced from the extension portion of the conductor 230 on the other installation part 204.

In another embodiment, there is no specific limitation on the number of installation parts 204, denoted as n (where n≥2). When designing a single battery with multiple electrode terminals (n > 2), the corresponding number of installation parts 204 should also be designed to ensure that each installation part 204 has one electrode terminal 290 installed.

Specifically, the number of conductors 230 needs to be designed according to the number of electrode terminals 290. There can be multiple conductors 230 as separate parts or a single conductor 230 as an integrated piece, regardless of how the number of electrode terminals 290 changes. Each installation part 204 is surrounded by the conductor 230, thus ensuring that the heat generated by each electrode terminal 290 is absorbed by the cooling medium 240 in the conductor 230, facilitating a gas-liquid cycle and thereby achieving uniform heat dissipation.

In one embodiment, the conductor 230 has a capillary structure, and the cooling medium 240, for instance, could be placed within this capillary structure. The conductor 230 can absorb the cooling medium 240 and conduct it to the vicinity of the electrode terminal 290.

Specifically, the capillary structure is primarily designed based on the theory of capillary action, which is a well-known phenomenon. Capillary action (sometimes referred to as capillarity, capillary motion, capillary rise, capillary tube effect, or wicking) is the process where a liquid flows in narrow spaces without the assistance of external forces, or even and even against external forces such as gravity. This effect can occur between the bristles of a brush, in thin tubes, in porous materials (e.g., paper and gypsum), in some nonporous materials (e.g., sand and liquefied carbon fibers), or within a biological cell. It occurs due to the intermolecular forces between the liquid and the surrounding solid surfaces. If the diameter of the tube is sufficiently small, the surface tension (caused by the cohesive forces within the liquid) and the adhesion between the liquid and the container walls work together to move the liquid.

Based on capillary action, the present application provides the conductor 230 located in the housing cavity A. The conductor 230 has a capillary structure. In this embodiment, the capillary structure includes a mixed layer, for instance, where the substances within the mixed layer are subjected to mixing, heating, and drying processes to create the capillary structure. The substances in the mixed layer include a mixture of metal powder and solution; the metal powder can be metals other than copper, such as titanium, aluminum, magnesium, and other metals. The metal powder can also be a mixture of various metals. Alternatively, the substances in the mixed layer can also be a mix of non-metal powders and solutions, such as non-metal powders like resins. Or, the mixed layer can contain a mixture of metal powders, non-metal powders, and solutions.

In one embodiment, the cooling medium 240 is a cooling liquid.

Exemplarily, the cooling medium 240 can be pure water or ethanol, but is not limited to these. The cooling medium 240 is cycled in gas and liquid phases within the housing cavity A via the conductor 230 to achieve uniform heat distribution.

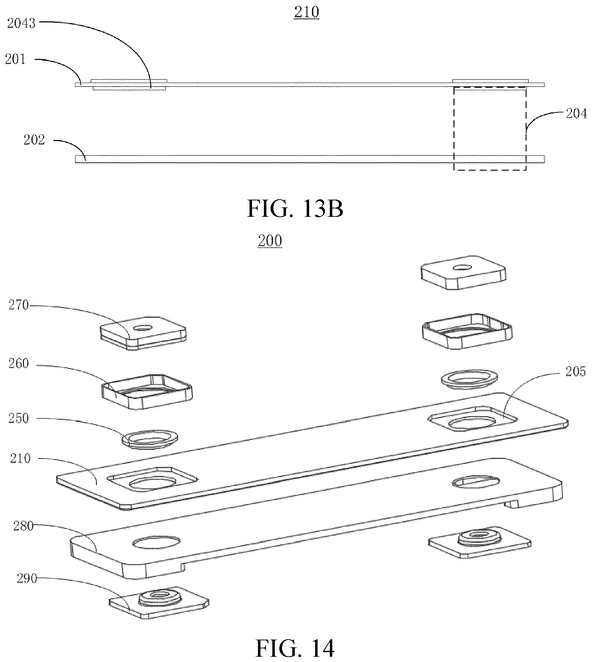

Please refer to FIGs. 11A, 13A, and 13B. In one embodiment, the first cover plate 210 includes:
a sealing plate 201 and a bottom cover plate 202 arranged oppositely, where the bottom cover plate 202 includes an edge board 203. The edge board 203 protrudes on one side of the bottom cover plate 202 facing the sealing plate 201 and surrounds an outer edge of the bottom cover plate 202, forming the housing cavity A between the sealing plate 201 and the bottom cover plate 202.

Specifically, the edge board 203 is welded to the sealing plate 201 and the bottom cover plate 202. A height of the edge board 203 in the first direction Y is the first height, thus forming the sealed housing cavity A with the sealing plate 201 and the bottom cover plate 202.

In any embodiment of the present application, a material of the first cover plate 210 can be copper and copper alloys, aluminum and aluminum alloys, stainless steel, or other metals and their alloys, depending on the actual application.

Preferably, materials of the sealing plate 201 and the bottom cover plate 202 are the same, for example, aluminum.

Specifically, the materials for the sealing plate 201 and the bottom cover plate 202 can also be titanium, stainless steel, or other metals, or can be composite metal components, such as copper-aluminum composite, copper-nickel composite, etc., depending on the actual application. In any embodiment of this application, the surface of the first cover plate 210 may be coated with an insulating layer or equipped with a plating layer (such as stainless steel plated with copper).

In one embodiment, the sealing plate 201 is provided with a plurality of first through-holes 2041 along the first direction Y, penetrating the sealing plate 201. The sealing plate 201, on one side of facing the bottom cover plate 202, is equipped with a connecting barrier 2043; the bottom cover plate 202, on the side close to the sealing plate 201, is provided with a plurality of second through-holes 2042; wherein, the first through-holes 2041 and the second through-holes 2042 correspond to each other, and the first through-holes 2041 and the second through-holes 2042 are connected by the connecting barrier 2043 to form the installation part 204.

Specifically, a height of the connecting barrier 2043 in the first direction Y is the first height, meaning the connecting barrier 2043 serves as the sidewall of the installation part 204. The connecting barrier 2043 may be circular in shape; however, the shape of the connecting barrier 2043 is not limited to circular and can be other geometric shapes.

Exemplarily, the structure of the connecting barrier 2043 can also be a triangular, quadrilateral, pentagonal, or other geometric polygonal structure, specifically adapted to the shapes of the first through-holes 2041 and the second through-holes 2042 to form the installation part 204. The structure of the installation part 204 is generally designed according to the structure of the electrode terminal 290, therefore, it can be understood that in conventional designs, the external structure of the electrode terminal 290 also determines the structure of the connecting barrier 2043. For example, in this application, if the electrode terminal 290 is cylindrical, then the designed installation part 204 is a round hole, and the connecting barrier 2043 is circular.

In another embodiment, the electrode terminal 290 can be designed as a triangular prism, quadrangular prism, or pentagonal prism, and other polygonal prism structures, where the connecting barrier 2043 then needs to be appropriately designed as a triangular, quadrilateral, pentagonal, or other polygonal structure, depending on the actual application, without specific limitations in this application.

Please refer to FIG. 14. In one embodiment, the cover plate assembly 200 further includes:
a sealing ring 250, located inside the installation part 204 and fitted over the electrode terminal 290.

Specifically, the sealing ring 250 has good thermal conductivity and is preferably made of thermally conductive adhesive material. The material and specific type of the sealing ring 250 can be selected according to actual needs, enabling the sealing ring 250 to have both insulating and heat-conductive properties, allowing heat from the electrode terminal 290 to be rapidly conducted to the first cover plate 210. The sealing ring 250 ensures that the first cover plate 210, serving as the cover, is insulated from the electrode terminal 290, thereby preventing short circuits.

In another embodiment, the cover plate assembly 200 further includes:
a first plastic piece 260, wherein one side of the first cover plate 210 is provided with an installation groove 205, and the first plastic piece 260 is located within the installation groove 205 and contacts the sealing ring 250.

Exemplarily, the installation groove 205 is located on the sealing plate 201 and on one side of the sealing plate 201 away from the bottom cover plate 202. Specifically, the sealing plate 201 features a protruding part that extends away from the bottom cover plate 202, with the installation groove 205 situated on the protruding part. The installation groove 205 recesses towards the bottom cover plate 202 to form the installation groove 205, and the first plastic piece 260 is installed within the installation groove 205. Specifically, the first plastic piece 260 can also be made of thermally conductive adhesive to facilitate the conduction of heat from a terminal pressure plate 270.

In another embodiment, the installation groove 205 is also located on the sealing plate 201 and on one side of the sealing plate 201 away from the bottom cover plate 202. The installation groove 205 recesses towards the bottom cover plate 202 to form the installation groove 205, but does not affect the seal integrity of the housing cavity A. The first plastic piece 260, installed in the installation groove 205, can also be made of thermally conductive adhesive to facilitate heat conduction from the terminal pressure plate 270. The shape of the first plastic piece 260 can be rectangular, adapted to fit the shape of the installation groove 205.

Exemplarily, the shape of the first plastic piece 260 can also be triangular, circular, or another geometric shape, and the installation groove 205 is adapted to the shape of the first plastic piece 260, whether triangular, circular, or another geometric shape, according to the actual application, without specific limitations in this application.

The terminal pressure plate 270 is located inside the first plastic piece 260 and is connected to the electrode terminal 290.

Specifically, the first plastic piece 260 features a recess on one side facing the first cover plate 210, and the size of this recess is adapted to the terminal pressure plate 270, allowing for the adaptive installation of the terminal pressure plate 270 within the recess. Meanwhile, one end of the electrode terminal 290 passes through the installation part 204, the installation groove 205, and the recess to connect with the terminal pressure plate 270.

Specifically, the shape of the recess can be triangular, circular, or another geometric shape, and the terminal pressure plate 270 is adapted to the shape of the recess, whether triangular, circular, or another geometric shape, as per the actual application. There are no specific limitations in this application, allowing the terminal pressure plate 270 to be installed within the recess of the first plastic piece 260.

The second plastic piece 280 is connected to the first cover plate 210 and is located on one side of the first cover plate 210 opposite to the installation groove 205.

Specifically, the second plastic piece 280 also features a through-hole corresponding to the installation part 204. The electrode terminal 290 passes through the through-hole and is positioned in the installation part 204.

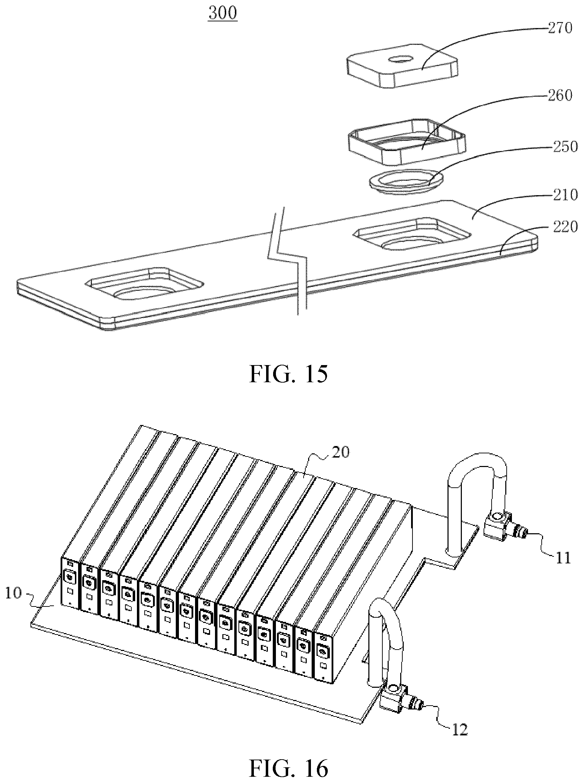

In one embodiment, please refer to FIG. 15, the top cover assembly 300 of this application includes:
a cover plate assembly 200; and
a second cover plate 220, located between the first cover plate 210 and the second plastic piece 280. The second cover plate 220 includes a first surface and a second surface opposite to the first surface, wherein one of these surfaces is connected to the first cover plate 210, and the other is connected to the second plastic piece 280.

The difference between the cover plate assembly 200 and the top cover assembly 300 lies in the fact that, in this embodiment, the first cover plate 210 of the cover plate assembly 200 only functions to evenly distribute the heat around the electrode terminals 290, and does not serve as a cover. In another embodiment of this application, the second cover plate 220 is provided, which is placed beneath the first cover plate 210, that is, between the first cover plate 210 and the second plastic piece 280. The other structures of the top cover assembly 300 are the same as those of the cover plate assembly 200 and are not repeated here.

The cover plate assembly 200 and the top cover assembly 300 provided in the present application include at least the following working processes or principles. The cover plate assembly 200 includes a first cover plate 210 featuring a housing cavity A. The first cover plate 210 includes a plurality of installation parts 204 along the first direction Y that penetrate the housing cavity A. The installation parts 204 are configured to accommodate electrode terminals 290. A conductor 230 is located within the housing cavity A, and at least partially encircles the installation parts 204. A cooling medium 240 fills both the housing cavity A and the conductor 230. During the charging and discharging process of the battery, the electrode terminals 290 generate heat, the cooling medium 240 near the electrode terminals 290 absorbs the thermal energy of the heat, transitioning from a liquid working medium to a gaseous working medium. The gaseous working medium quickly fills the housing cavity A. The gaseous medium, not having absorbed heat, rapidly condenses. The condensed cooling medium then returns to the vicinity of the electrode terminals 290 through the conductor 230, thus completing a gas-liquid cycle, enhancing the cooling performance, and preventing excessively high temperatures in localized areas of the cover plate assembly.

The present application further provides a battery 20, which includes the aforementioned battery case 100.

Additionally, the present application provides a battery module. FIG. 16 presents a schematic perspective view of the battery module provided in one embodiment of the present application. Please refer to FIG. 16, which shows that the battery module includes: a bottom protective plate 10 and a plurality of batteries 20. FIG. 17 is a schematic perspective view of the battery provided in one embodiment of the present application. Referring to FIGs. 16 and 17, the bottom protective plate 10 is equipped internally with cooling liquid channels, and a surface of the bottom protective plate 10 features an inlet 11 and an outlet 12 for the cooling liquid. The batteries 20 are mounted on the bottom protective plate 10, each battery 20 includes a battery case 100. The battery case 100 internally houses a battery cell.

FIG. 18 is a first perspective schematic view of the battery case provided in one embodiment of this application. Please refer to FIG. 18, where a side of the battery case 100 facing the bottom protective plate 10 is provided with at least one opening 21. A vapor chamber 22 is installed within the opening 21, with one side of the vapor chamber 22 either indirectly or directly contacting the bottom protective plate 10, while the other side of the vapor chamber either indirectly or directly contacts the battery cell.

In one embodiment, please refer to FIG. 16, a planar structure of the bottom protective plate 10 is rectangular. However, FIG. 16 is merely a schematic representation of the bottom protective plate 10. In other embodiments, the planar structure of the bottom protective plate 10 can also be other shapes, such as circular, elliptical, triangular, pentagonal, and other structures.

In one embodiment, the battery 20 can be a blade battery or a stretch battery, etc.

In one embodiment, the number of batteries 20 can be one, or it can be two, three, or more than three, with no specific limitation set here.

In one embodiment, as shown in FIG. 18, the battery case 100 can be made of aluminum or copper. The shape of the battery case 100 is rectangular, though FIG. 18 is only a schematic representation of the battery case 100. In other embodiments, the shape of the battery case 100 can also be other shapes, such as cylindrical or cubic.

In one embodiment, refer to FIG. 18, where the vapor chamber 22 is rectangular. FIG. 18 serves only as a schematic illustration of the vapor chamber 22, and in other embodiments, the shape of the vapor chamber 22 can also be other shapes, such as circular, triangular, pentagonal, etc.

In one embodiment, as shown in FIG. 18, the opening 21 may cover the entire side of the battery case 100 that is near the bottom protective plate 10. However, FIG. 18 only provides an exemplary illustration of the opening 21; in other embodiments, the opening 21 can be on one side of the battery case 100 near the bottom protective plate 10, with multiple openings 21 each fitted with one vapor chamber 22. Here, the number of openings 21 can be one, or it can be two, three, or more, with no specific limitation set here.

In one embodiment, as shown in FIGs. 16 to 18, the vapor chamber 22 is located at the opening 21, thereby transferring the heat from the battery cell to the vapor chamber 22, and then from the vapor chamber 22 to the bottom protective plate 10, which ultimately dissipates the heat.

Specifically, as shown in FIG. 16, the bottom protective plate 10 internally features cooling liquid channels, through which the cooling liquid circulates. This setup allows the heat generated by the battery cell to be conducted through the bottom protective plate 10 to the cooling liquid. The cooling liquid can flow through the cooling liquid channels, carrying away the heat produced by the battery cell, ensuring that the cell operates within a safe temperature range. In practical applications, the number of cooling liquid channels can be adjusted based on requirements and can be one, two, three, or more, with no specific limitation set here.

In one embodiment, as shown in FIGs. 16 and 18, the vapor chamber 22 is in direct contact with the bottom protective plate 10 to enhance thermal conductivity. However, FIGs. 16 and 18 are merely schematic illustrations of the arrangement between the vapor chamber 22 and the bottom protective plate 10. In other embodiments, the vapor chamber 22 may also be in indirect contact with the bottom protective plate 10.

In this application's embodiments, as referenced in FIGs. 16 to 18, this application involves setting at least one opening 21 in the battery case 100 of each battery 20. Since the vapor chamber 22 is installed within the opening 21, one side of the vapor chamber 22 is in indirect or direct contact with the battery cell, and the other side is in indirect or direct contact with the bottom protective plate 10. Thus, the heat from battery 20 can be transferred to the vapor chamber 22, and from the vapor chamber 22 to the bottom protective plate 10. The bottom protective plate 10 then disperses the heat through the cooling fluid channels in the bottom protective plate 10, thereby maintaining the battery module at an appropriate environmental temperature to ensure the full progression of electrochemical reactions of the battery module.

In another embodiment, refer to FIG. 18, the heat dissipation efficiency of the vapor chamber 22 is greater than the heat dissipation efficiency of the battery case 100.

Specifically, a thermal conductivity of the vapor chamber 22 may range from 3000 to 10000 W/(mK), whereas a thermal conductivity of the battery case 100 is between 180 and 450 W/(mK). Therefore, the thermal conductivity of the vapor chamber 22 is significantly higher than the thermal conductivity of the battery case 100, and a heat transfer rate of the vapor chamber 22 is faster than a heat transfer rate of the battery case 100. Consequently, the cooling effect of the vapor chamber 22 is better than the cooling effect of the battery case 100. By utilizing the difference in thermal conductivity between the vapor chamber 22 and the battery case 100, the heat generated by the battery cell is quickly transferred to the bottom protective plate 10 below and carried away by the cooling fluid.

Please refer to FIGs. 18 and 19, the heat dissipation efficiency of the vapor chamber 22 is greater than the heat dissipation efficiency of the first side plate 138 and the second side plate 139. Therefore, the heat produced by the battery 20 is more effectively transferred to the vapor chamber 22. The vapor chamber 22 quickly transmits the heat to the bottom protective plate 10. The bottom protective plate 10 then dissipates the heat.

In one embodiment, FIG. 19 provides a second perspective schematic view of the battery case provided by one embodiment of the present application. Refer to FIGs. 18 and 19, where the battery case 100 wraps around edges of the vapor chamber 22 and confines a housing space for housing the battery cell.

In one embodiment, by placing the battery cell within the housing space formed by the battery case 100 and the vapor chamber 22, the space inside the battery 20 is maximized, enhancing the energy density and capacity of the battery 20.

In one embodiment, as shown in FIGs. 18 and 19, the battery case 100 includes a third side plate 140, a first side plate 138, and a second side plate 139. Here, one edge of the first side plate 138 connects with one edge of the third side plate 140, while another edge of the first side plate 138 wraps around one edge of the vapor chamber 22. One edge of the second side plate 139 connects with another edge of the third side plate 140, and another edge of the second side plate 139 wraps around the another edge of the vapor chamber 22.

In one embodiment, the third side plate 140, the first side plate 138, and the second side plate 139 can be integrally formed. In this case, a bending angle formed between the third side plate 140 and the first side plate 138 is between 87° and 93°. A bending angle between the third side plate 140 and the second side plate 139 is also between 87° and 93°. The third side plate 140, the first side plate 138, and the second side plate 139 can be processed using methods such as stamping or bending machines.

In one embodiment, as shown in FIGs. 18 and 19, one edge of the vapor chamber 22 is welded to one edge of the first side plate 138, and another edge of the vapor chamber 22 is welded to one edge of the second side plate 139.

In this embodiment, welding is used to ensure the airtightness of the battery 20, preventing internal leakage of the battery 20 and thereby ensuring the normal operation and service life of the battery 20.

In one embodiment, FIG. 20 is an enlarged view of part A from FIG. 19. From FIGs. 18 and 20, it can be seen that a joint face between the vapor chamber 22 and the first side plate 138 is connected by welding. Also, a joint face between the vapor chamber 22 and the second side plate 139 is also connected by welding.

In one embodiment, apart from welding, the vapor chamber 22 and the first side plate 138 (or the second side plate 139) can also be connected using adhesives, screws, snap-fit, or other methods.

In one embodiment, the vapor chamber 22, the first side plate 138, and the second side plate 139 can also be integrally formed, though this is not exclusively specified here.

In one embodiment, a thickness of the vapor chamber 22 ranges from 0.3mm to 1.0mm, and a thickness of the battery case 100 ranges from 0.3mm to 1.0mm. For example, the thickness of the vapor chamber can be 0.35mm, 0.4mm, 0.5mm, 0.6mm, 0.7mm, 0.8mm, or 0.9mm. Similarly, the thickness of the battery case 100 can be 0.35mm, 0.4mm, 0.5mm, 0.6mm, 0.7mm, 0.8mm, or 0.9mm. The thickness of the vapor chamber 22 is matched with the thickness of the battery case 100. With the thickness within the range of 0.3 to 1.0mm, the vapor chamber 22 can transfer heat from the battery cell to the outside more rapidly, thereby enhancing the cooling efficiency.

In one embodiment, as shown in FIG. 16, both the inlet 11 and the outlet 12 are located on the same side of the bottom protective plate 10. Of course, FIG. 16 is only a schematic representation of the inlet 11 and the outlet 12. In other embodiments, the inlet 11 and the outlet 12 may be located on opposite sides of the bottom protective plate 10.

In one embodiment, the cooling fluid channels, the inlet 11, and outlet 12 can be independent components. The inlet 11 and outlet 12 can be fixedly installed on the cooling fluid channels using fasteners or adhesives, where the fasteners can include, but are not limited to, threaded fasteners such as bolts, studs, or screws. The cooling fluid channels, the inlet 11, and the outlet 12 can also be integrally molded by injection molding; however, this is not exclusively defined here.

In one embodiment, by using extrusion molding and welding processes, the bottom protective plate 10 can be formed that includes the inlet 11, the outlet 12, and the cooling fluid channels.

In one embodiment, when the inlet 11 and the outlet 12 are set on opposite sides of the bottom protective plate 10, the cooling fluid channels are arranged along the first direction of the bottom protective plate 10, with the inlet 11 and the outlet 12 respectively located at two ends of the bottom protective plate 10 in its first direction; and/or the cooling fluid channels are arranged side by side along the second direction of the bottom protective plate 10, with the inlet 11 and the outlet 12 located at two ends of the bottom protective plate 10 in its second direction, where the first direction is perpendicular to the second direction. For example, the first direction may correspond to the length direction of the bottom protective plate 10, and the second direction may correspond to the width direction of the bottom protective plate 10. Alternatively, the first direction may be the width direction of the bottom protective plate 10 and the second direction the length direction of the bottom protective plate 10.

In one embodiment, the shape of the cooling fluid channel can be linear, U-shaped, or S-shaped, or the like.

To better implement the embodiments described in this application, on the basis of the battery module, this application further provides a battery pack, which includes the aforementioned battery module. In the battery pack of this application, the battery case of each battery is equipped with at least one opening. The vapor chamber is installed in the opening, with one side of the vapor chamber either indirectly or directly contacting the battery cell, and another side of the vapor chamber either indirectly or directly contacting the bottom protective plate. This arrangement allows the heat generated by the battery cell to be quickly transferred to the bottom protective plate via the vapor chamber. Utilizing the cooling fluid channels inside the bottom protective plate to remove the heat ensures that the battery module operates at an appropriate environmental temperature to allow for the full progression of electrochemical reactions of the battery module.

## Claims

1. A battery case (100), **characterized in that** comprises:
a top cover assembly (300), a base plate (101), and a side plate (102) connected to the base plate (101), wherein the base plate (101) and the side plate (102) enclose an installation cavity (103), and the top cover assembly (300) seals the installation cavity (103), wherein at least one of the base plate (101) and the side plate (102) comprises a vapor chamber structure.

2. The battery case (100) according to claim 1, **characterized in that** the vapor chamber structure comprises a first vapor chamber (105), wherein the first vapor chamber (105) comprises a first outer plate (106) and a first inner plate (107) connected to each other, a plurality of first support protrusions (108) disposed between the first inner plate (107) and the first outer plate (106), and at least one first liquid-wicking core (109), wherein the first inner plate (107), the first outer plate (106), and the first support protrusions (108) collectively enclose a first cavity (110) for holding a liquid cooling medium, with the at least one first liquid-wicking core (109) disposed in the first cavity (110) for absorbing the liquid cooling medium, wherein the base plate (101) comprises the first vapor chamber (105).

3. The battery case (100) according to claim 2, **characterized in that** the first vapor chamber (105) further comprises a plurality of first protruding structures (111), the first protruding structures (111) are disposed on one side of the first outer plate (106) facing away from the first inner plate (107), and the first protruding structures (111) comprise a plurality of first long protrusions (112) and a plurality of first protrusion points (113), with a length of at least one of the first long protrusions (112) is greater than a length of at least one of the first protrusion points (113), wherein the first long protrusions (112) extend in a width direction of the battery case (100) and are spaced apart in a length direction of the battery case (100), wherein in the width direction of the battery case (100), a size of the first long protrusion (112) is b, and a size of the first vapor chamber (105) is B, where b=cB, and c is a coefficient, with 1/4≤c≤2/3.

4. The battery case (100) according to any one of claims 1-3, **characterized in that** the vapor chamber structure comprises a second vapor chamber (114), wherein the second vapor chamber (114) comprises a second outer plate (115) and a second inner plate (116) connected to each other, a plurality of second support protrusions (117) disposed between the second inner plate (116) and the second outer plate (115), and at least one second liquid-wicking core (118), wherein the second inner plate (116), the second outer plate (115), and the second support protrusions (117) collectively enclose a second cavity (119) for holding a liquid cooling medium, with the at least one second liquid-wicking core (118) disposed in the second cavity (119) for absorbing the liquid cooling medium, wherein the side plate (102) comprises the second vapor chamber (114).

5. The battery case (100) according to claim 4, **characterized in that** the vapor chamber structure comprises a second vapor chamber (114), wherein the second vapor chamber (114) comprises a plurality of second protruding structures (120), the second protruding structures (120) are disposed on one side of the second outer plate (115) facing away from the second inner plate (116), the second protruding structures (120) comprise a plurality of second long protrusions (121) and a plurality of second protrusion points (122), with a length of at least one of the second long protrusions (121) is greater than a length of at least one of the second protrusion points (122), wherein the second vapor chamber (114) comprises bent areas (144), and the second long protrusions (121) are disposed in the bent areas (144),
wherein in a height direction of the battery case (100), a size of the side plate (102) is A, and in an extension direction of the second long protrusion (121), a size of the second long protrusion (121) is a, where a=dA, and d is a coefficient, with 1/10≤d≤1/5.

6. The battery case (100) according to claim 5, **characterized in that** the second long protrusions (121) are spaced apart in the height direction of the battery case (100) and extend in a direction intersecting the height direction, the second protrusion points (122) are disposed at two ends of the second long protrusions (121), and the second protruding structures (120) further comprise a plurality of third protrusion points (123), wherein the length of at least one of the second long protrusions (121) is greater than a length of at least one of the third protrusion points (123), and the second long protrusions (121) and the second protrusion points (122) are disposed between the third protrusion points (123).

7. The battery case (100) according to claim 6, **characterized in that** the second vapor chamber (114) comprises a first plate (124), a second plate (125), a third plate (126), a fourth plate (127), a fifth plate (128), and a sixth plate (129),
wherein the first plate (124), the second plate (125), the third plate (126), the fourth plate (127), the fifth plate (128), and the sixth plate (129) are sequentially connected to enclose the installation cavity (103);
the second plate (125), the third plate (126), and the fifth plate (128) comprise the bent areas (144);
the second long protrusions (121) and the second protrusion points (122) are disposed on the second plate (125), the third plate (126), and the fifth plate (128); the third protrusion points (123) are disposed on the first plate (124), the fourth plate (127), and the sixth plate (129); and the second plate (125) comprises a first part (130) and a second part (131) connected by bending;
the third plate (126) comprises a third part (134) and a fourth part (135) connected by bending;
the fifth plate (128) comprises a fifth part (136) and a sixth part (137) connected by bending;
the side plate (102) comprises a first side plate (138) and a third side plate (140) disposed opposite to each other, and a second side plate (139) and a fourth side plate (141) disposed opposite to each other; the second side plate (139) is connected to one side of the first side plate (138) and the third side plate (140), and the fourth side plate (141) is connected to another side of the first side plate (138) and the third side plate (140);
the first plate (124) and the first part (130) of the second plate (125) constitute the first side plate (138);
the second part (131) of the second plate (125) and the third part (134) of the third plate (126) constitute the second side plate (139);
the fourth part (135) of the third plate (126), the fourth plate (127), and the fifth part (136) of the fifth plate (128) constitute the third side plate (140);
the sixth part (137) of the fifth plate (128) and the sixth plate (129) constitute the fourth side plate (141), multiple second liquid-wicking cores (118) are disposed in the second cavity (119), and the second liquid-wicking cores (118) extend along the height direction of the battery case (100) and spaced apart in a direction intersecting the height direction; the second liquid-wicking cores (118) are disposed within the first plate (124) and the fourth plate (127), and between each pair of adjacent plates from the first plate (124) to the sixth plate (129).

8. The battery case (100) according to claim 5, **characterized in that** the side plate (102) comprises a dense area (142) located away from the base plate (101) and a less-dense area (143) close to the base plate (101), and a density of the second protruding structures (120) in the dense area (142) is greater than a density of the second protruding structures (120) in the less-dense area (143);
a surface area of the dense area (142) is S1, and a surface area of the less-dense area (143) is S2, with S1=e(S1+S2), where e is a coefficient, with 1/7≤e≤1/2,
wherein a distance between each pair of the adjacent second protruding structures (120) in the dense area (142) is consistent; or, a distance between each consecutive pair of the adjacent second protruding structures (120) in the dense area (142) varies in arithmetic progression; or, the second protruding structures (120) in the dense area (142) are arranged irregularly.

9. The battery case (100) according to claim 1, **characterized in that** the top cover assembly (300) comprises a cover plate assembly (200), the cover plate assembly (200) comprising:
a first cover plate (210) provided with a housing cavity inside, wherein the first cover plate (210) comprises a plurality of installation parts (204) arranged along a first direction and penetrating the housing cavity, and the installation parts (204) accommodate terminal posts (290);
a conductor (230) disposed in the housing cavity and at least partially surrounding the installation parts (204); and
a cooling medium (240) filling the housing cavity and the conductor (230).

10. The battery case (100) according to claim 9, **characterized in that** multiple conductors (230) are disposed in the housing cavity, and each of the conductors (230) at least partially surrounds a sidewall of one of the installation parts (204) away from the terminal posts (290);
the conductors (230) are either connected to each other or are spaced apart.

11. The battery case (100) according to claim 9, **characterized in that** the first cover plate (210) comprises:
a sealing plate (201) and a bottom cover plate (202) arranged opposite to each other, the bottom cover plate (202) comprises an edge board (203), the edge board (203) protrudes from the bottom cover plate (202) towards the sealing plate (201) and surrounds an outer edge of the bottom cover plate (202), and the housing cavity is formed between the sealing plate (201) and the bottom cover plate (202).

12. The battery case (100) according to claim 11, **characterized in that** the sealing plate (201) is provided with a plurality of first through-holes (2041) arranged along the first direction and penetrating the sealing plate (201); the sealing plate (201), on one side facing the bottom cover plate (202), is equipped with a connecting barrier (2043); the bottom cover plate (202), on the side close to the sealing plate (201), is provided with a plurality of second through-holes (2042); the first through-holes (2041) and the second through-holes (2042) are disposed corresponding to each other, and the first through-holes (2041) and the second through-holes (2042) are connected by the connecting barrier (2043) to constitute the installation part (204).

13. The battery case according to claim 9, **characterized in that** the top cover assembly (300) further comprises:
a second cover plate (220) disposed between the first cover plate (210) and the second plastic piece (280), wherein the second cover plate (220) comprises a first surface and a second surface opposite to the first surface, with one of the first surface and the second surface is connected to the first cover plate (210) and the other of the first surface and the second surface is connected to the second plastic piece (280).

14. A battery module, **characterized in that** comprises:
a bottom protective plate (10), wherein the bottom protective plate (10) is internally equipped with cooling fluid channels, and provided with an inlet (11) and an outlet (12) positioned on a surface of the bottom protective plate (10) and communicating with the cooling fluid channels; and
a plurality of batteries (20), wherein the batteries (20) are mounted on the bottom protective plate (10), each of the batteries (20) comprises a battery case (100) with a battery cell inside the battery case (100),
wherein one side of the battery case (100) facing the bottom protective plate (10) is provided with at least one opening (21), a vapor chamber (22) is installed inside the opening (21), one side of the vapor chamber (22) either indirectly or directly contacts the bottom protective plate (10), and another side of the vapor chamber (22) either indirectly or directly contacts the battery cell,
wherein a heat dissipation efficiency of the vapor chamber (22) is greater than a heat dissipation efficiency of the battery case (100).

15. The battery module according to claim 13, **characterized in that** the battery case (100) wraps around edges of the vapor chamber (22) and encloses a housing space, and the battery cell is disposed within the housing space,
wherein the battery case (100) comprises a first side plate , a second side plate (139), and a third side plate (140); one edge of the first side plate (138) is connected to one edge of the third side plate (140), and another edge of the first side plate (138) wraps around one edge of the vapor chamber (22); one edge of the second side plate (139) is connected to another edge of the third side plate (140), and another side of the second side plate (139) wraps around another edge of the vapor chamber (22),
or/and one edge of the vapor chamber (22) is welded to the another edge of the first side plate (138), and the another edge of the vapor chamber (22) is welded to the another edge of the second side plate (139).
